(19) Europäisches Patentamt
European Patent Office
Office européen des brevets

(11) **EP 4 734 434 A1**

(12) **EUROPEAN PATENT APPLICATION**

(43) Date of publication:
**29.04.2026  Bulletin 2026/18**

(21) Application number: **24208484.6**

(22) Date of filing: **23.10.2024**

(51) International Patent Classification (IPC):
***H04L 9/08*** *(2006.01)*

(52) Cooperative Patent Classification (CPC):
**H04L 9/0858; H04L 9/0852;** H04L 2209/34

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Terra Quantum AG
9000 St. Gallen (CH)**

(72) Inventor: **SYCH, Denis
9000 St. Gallen (CH)**

(74) Representative: **Lucke, Andreas
Boehmert & Boehmert
Anwaltspartnerschaft mbB
Pettenkoferstrasse 22
80336 München (DE)**

Remarks:
Amended claims in accordance with Rule 137(2)
EPC.

(54) **METHODS, DATA PROCESSING DEVICES, AND SYSTEM FOR QUANTUM KEY DISTRIBUTION**

(57)     A method for quantum key distribution is provided, the method being carried out in a first data processing device (11) having means for preparing and transmitting quantum states, the method comprising: providing at least one secret index information key; generating a quantum signal indicative of a first initial string and transmitting the quantum signal to a second data processing device (12) via a quantum channel (10); determining, by reconciling measurement information between the first data processing device (11) and the second data processing device (12), a first reconciled string from a reconciliation subset of the first initial string; determining an error estimate from an error estimate subset of the first reconciled string; determining a shared string from an error correction subset of the first reconciled string by performing error correction on the first reconciled string; and determining, by privacy amplification, a shared key from a privacy amplification subset of the shared string, wherein the order of elements within at least one of the first initial string, the first reconciled string, the shared string, the reconciliation subset, the error estimate subset, the error correction subset, and the privacy amplification subset is scrambled using the at least one index information key before transmission to the second data processing device (12). Further methods, data processing devices, and a system for quantum key distribution are disclosed.

Fig. 2

EP 4 734 434 A1

**Description**

Technical Field

The present disclosure refers to methods for quantum key distribution. Further, data processing devices and a system for quantum key distribution are disclosed.

Background

Quantum key distribution (QKD) comprises quantum and classical steps. The former comprise generation, transmission, and reception of quantum signals, e.g., quantum optical signals. The latter are based on classical communication and include synchronization, parameter estimation, raw data processing (e.g., basis reconciliation, post-selection), error correction, privacy amplification, or authentication.

Generic QKD protocols typically require that all classical procedures are known to everyone in advance, in particular, to a potential eavesdropper. For example, the eavesdropper may know the choice of coding words during error correction, as well as the choice of hash functions during privacy amplification.

In document EP 4 037 247 A1, a method for quantum key distribution is disclosed, in which an initial key is provided in a first device and a second device, a quantum signal is received, an encrypted signal indicating quantum measurement parameters is generated via the initial key in the second device and transmitted to the first device, and a key shared between the first and the second device is determined.

Document CN 108 737 079 A relates a quantum key management system in the field of quantum communication technologies. A key index for locating a quantum key may be encrypted.

Document CN 112 187 449 A is directed at a quantum database query method, as well as an encryption and decryption method. A key encryption storage module receives and uses a classical decryption algorithm to decrypt a query data index value according to a quantum key generated by quantum key distribution.

In document US 2016 / 127 073 A1, methods for increasing communication bandwidth are described. Reference is made to index permutations in the context of orthogonal functions.

The dissertation of R. Renner, Security of Quantum Key Distribution, ETH Zürich (September 2005) describes announcing a permutation within a QKD protocol and two parties permuting the order of subsystems according to the permutation.

Summary

It is an object of the present disclosure to provide improved techniques for transmitting data via quantum key distribution.

For solving the problem, methods, data processing devices, and a system for quantum key distribution are provided according to the independent claims. Further embodiments are disclosed in dependent claims and as set out below.

According to an aspect, a method for quantum key distribution is provided, the method being carried out in a first data processing device having means for preparing and transmitting quantum states. The method comprises providing at least one index information key; generating a quantum signal indicative of a first initial string and transmitting the quantum signal to a second data processing device via a quantum channel; determining, by reconciling measurement information between the first data processing device and the second data processing device, a first reconciled string from a reconciliation subset of the first initial string; determining an error estimate from an error estimate subset of the first reconciled string; determining a shared string from an error correction subset of the first reconciled string by performing error correction on the first reconciled string; and determining, by privacy amplification, a shared key from a privacy amplification subset of the shared string. The order of elements (the indices) within at least one of the first initial string, the first reconciled string, the shared string, the reconciliation subset, the error estimate subset, the error correction subset, and the privacy amplification subset is scrambled using the at least one index information key before transmission to the second data processing device.

According to another aspect, a further method for quantum key distribution is provided, the method being carried out in a second data processing device having means for receiving quantum states. The method comprises: providing at least one secret index information key; receiving a quantum signal from a first data processing device via a quantum channel; determining, a second initial string by measuring the quantum signal; determining, by reconciling measurement information between the first data processing device and the second data processing device, a second reconciled string from a reconciliation subset of the second initial string; determining an error estimate from an error estimate subset of the second reconciled string; determining a shared string from an error correction subset of the second reconciled string by performing error correction on the second reconciled string; and determining, by privacy amplification, a shared key from a privacy amplification subset of the shared string. The order of elements within at least one of the second initial string, the second reconciled string, the shared string, the reconciliation subset, the error estimate subset, the error correction subset, and the privacy amplification subset is scrambled using the at least one index information key before transmission to the first data processing device.

According to another aspect, a first data processing device for quantum key distribution is provided, comprising at least one processor and means for preparing and transmitting quantum states. The first data processing device is configured to carry out following steps: providing at least one secret index information key; generating a quantum signal indicative of a first initial string and transmitting the quantum signal to a second data processing device via a quantum channel; determining, by reconciling measurement information between the first data processing device and the second data processing device, a first reconciled string from a reconciliation subset of the first initial string; determining an error estimate from an error estimate subset of the first reconciled string; determining a shared string from an error correction subset of the first reconciled string by performing error correction on the first reconciled string; and determining, by privacy amplification, a shared key from a privacy amplification subset of the shared string, wherein the order of elements within at least one of the first initial string, the first reconciled string, the shared string, the reconciliation subset, the error estimate subset, the error correction subset, and the privacy amplification subset is scrambled using the at least one index information key before transmission to the second data processing device.

According to another aspect, a second data processing device for quantum key distribution is provided, comprising at least one processor and means for measuring quantum states and being configured to carry out following steps: providing at least one secret index information key; receiving a quantum signal from a first data processing device via a quantum channel; determining, a second initial string by measuring the quantum signal; determining, by reconciling measurement information between the first data processing device and the second data processing device, a second reconciled string from a reconciliation subset of the second initial string; determining an error estimate from an error estimate subset of the second reconciled string; determining a shared string from an error correction subset of the second reconciled string by performing error correction on the second reconciled string; and determining, by privacy amplification, a shared key from a privacy amplification subset of the shared string, wherein the order of elements within at least one of the second initial string, the second reconciled string, the shared string, the reconciliation subset, the error estimate subset, the error correction subset, and the privacy amplification subset is scrambled using the at least one index information key before transmission to the first data processing device.

According to another aspect, a system for quantum key distribution is provided. The system comprises a first data processing device with at least one processor and means for preparing and transmitting quantum states as well as a second data processing device with at least one processor and means for measuring quantum states. The system is configured to carry out following steps: providing at least one secret index information key in the first and the second data processing device; generating, in the first data processing device, a quantum signal indicative of a first initial string and transmitting the quantum signal to the second data processing device via a quantum channel; receiving the quantum signal in the second data processing device; determining, in the second data processing device, a second initial string by measuring the quantum signal; determining, by reconciling measurement information between the first data processing device and the second data processing device, a first reconciled string from a reconciliation subset of the first initial string in the first data processing device and a second reconciled string from the reconciliation subset of the second initial string in the second data processing device; determining at least one of an error estimate from an error estimate subset of the first reconciled string in the first data processing device and a further error estimate from the error estimate subset of the second reconciled string in the second data processing device; determining a shared string from an error correction subset of the first reconciled string and the second reconciled string by performing error correction on the first reconciled string in the first data processing device and on the second reconciled string in the second data processing device; and determining, by privacy amplification in the first and the second data processing device, a shared key from a privacy amplification subset of the shared string. The order of elements within at least one of the first initial string, the second initial string, the first reconciled string, the second reconciled string, the shared string, the reconciliation subset, the error estimate subset, the error correction subset, and the privacy amplification subset is scrambled using the at least one index information key before transmission to the first and/or the second data processing device.

By scrambling or encrypting the order of elements / the indices of strings/subsets which are classically processed in QKD, security of quantum communication can be enhanced and the secret key rate be substantially increased, notably in realistic setups in which an eavesdropper has limited resources. As a result, the eavesdropper can extract at most very little information from quantum eavesdropping. This allows for avoiding the bound on maximum tolerable error rate (which is, e.g., at 11 % in the case of the standard BB84) and for establishing QKD over any noisy channel, or, equivalently, over arbitrary long distances (arbitrarily high signal losses).

The reconciliation subset may be a subset of the first and/or second initial string. The error estimate subset may be a subset of the first and/or second reconciled string. The error correction subset may be a subset of the first and/or second reconciled string. The privacy amplification subset may be a subset of the shared string.

Reconciling measurement information between the first and the second data processing device may include basis reconciliation as well as synchronization of transmission and receipt of the quantum signal. In particular, reconciling measurement information may include determining indices of successfully received quantum states. Indices of the reconciliation subset may be indicative of at least one of synchronized indices, successfully received indices, and matching of preparation parameters with measurement parameters.

The strings may each comprise a plurality of symbols, in particular a plurality of bits. Each string position may contain one symbol and/or bit. Each of the indices may be indicative of the one symbol at the respective string position.

The order of elements (character/symbol/bit order/ordering) within at least one of the first initial string, the second initial string, the first reconciled string, the second reconciled string, the shared string, the reconciliation subset, the error estimate subset, the error correction subset, and the privacy amplification subset may be scrambled before transmission of the respective one of the first initial string, the second initial string, the first reconciled string, the second reconciled string, the shared string, the reconciliation subset, the error estimate subset, the error correction subset, and the privacy amplification subset may be scrambled before transmission to the first and/or second data processing device. The subsets may coincide for the first and the second data processing device.

The order within at least one of the first initial string, the second initial string, the first reconciled string, the second reconciled string, the shared string, the reconciliation subset, the error estimate subset, the error correction subset, and the privacy amplification subset may be unscrambled/re-established/decrypted using the at least one index information key, in particular after receipt of the string/subset in the first and/or the second data processing device.

The order (of at least one of the first initial string, the second initial string, the first reconciled string, the second reconciled string, the shared string, the reconciliation subset, the error estimate subset, the error correction subset, and the privacy amplification subset) may be scrambled/encrypted by applying a permutation on the indices of at least one of the first initial string, the second initial string, the first reconciled string, the second reconciled string, the shared string, the reconciliation subset, the error estimate subset, the error correction subset, and the privacy amplification subset.

In other words, the order may be scrambled by permuting at least one of the indices of the first initial string, the indices of the second initial string, the indices of the first reconciled string, the indices of the second reconciled string, the indices of the shared string, the indices of the shared string, the indices of the shared string, the indices of the reconciliation subset, the indices of the error estimate subset, the indices of the error correction subset, and the indices of the privacy amplification subset.

Indices of a subset (substring) may indicate (all) indices of the subset within the string from which the subset is determined. Indices of strings may indicate all indices of the respective string.

The indices of the reconciliation subset may be indicative of at least one of synchronized indices, successfully received indices, and matching of preparation parameters with measurement parameters.

The preparation parameters and/or the measurement parameters may be indicative of (quantum) basis settings, such as horizontally/vertically polarized or anti-diagonally/diagonally polarized.

The permutation may be uniquely determined by the at least one index information key. In other words, the at least one index information key may allow for uniquely reproducing the permutation.

The permutation may be determined using a Fisher-Yates shuffle. Additionally or alternatively, the permutation may be determined using Sattolo's algorithm.

The permutation may be determined using a (pseudo-)random number generator. Preferably, a seed for the random number generator may be determined from the at least one index information key. The seed may thus be provided in both the first and the second data processing device, yielding the same permutation. The random number generator in the first data processing device may be identical to the random number generator in the second data processing device.

Additionally or alternatively, the order (of at least one of the first initial string, the second initial string, the first reconciled string, the second reconciled string, the shared string, the reconciliation subset, the error estimate subset, the error correction subset, and the privacy amplification subset) may be scrambled by applying a stream cipher on the indices of at least one of the second initial string, the second reconciled string, the shared string, the reconciliation subset, the error estimate subset, the error correction subset, and the privacy amplification subset.

In particular, the order may be scrambled by applying a stream cipher on a key string, which is determined from the at least one index information key, together with at least one of the indices of at least one of the second initial string, the second reconciled string, the shared string, the reconciliation subset, the error estimate subset, the error correction subset, and the privacy amplification subset.

The stream cipher may for example be a Vernam cipher. In particular, the key string may be a binary string and the respective order may be scrambled by applying a bitwise XOR on the key string and on a binarized version of at least one of the indices of at least one of the second initial string, the second reconciled string, the shared string, the reconciliation subset, the error estimate subset, the error correction subset, and the privacy amplification subset.

The key string may be determined from the at least one index information key additionally using a random number generator and/or using a key stretching method.

The order may be scrambled block-wise with a predetermined data block size. The data block size may for example be between $10^3$ and $10^7$, preferably between $10^4$ and $10^6$, more preferably between $0.8 \cdot 10^5$ and $1.2 \cdot 10^5$.

The at least one index information key may be provided as a shared secret, preferably between the first and the second data processing device. The at least one index information key may also be a shared secret between the first and the second data processing device and at least one further data processing device. The order of elements / indices may be scrambled using a secret encryption/scrambling rule.

The at least one index information key may be provided using an RSA (Rivest-Shamir-Adleman) method and/or a Diffie-Hellman method. The at least one index information key may also be provided/distributed via previous QKD sequence between the first and the second data processing device or in a different way, e.g., with a trusted courier.

The method may further comprise encrypting, e.g., using a symmetric encryption method, at least one of the first error information, the second error information, the first error correction data, the second error correction data, and the privacy amplification data before transmission from the first the second data processing device (and/or vice versa). The method may also comprise decrypting of at least one of the first error information, the second error information, the first error correction data, the second error correction data, and the privacy amplification data, preferably after receipt. The encrypting and/or decrypting may be carried out using a further key provided in both the first and the second data processing device.

The at least one index information key may comprise at least one of an initial string key, a reconciled string key, a shared string key, a reconciliation subset key, an error estimate subset key, an error correction subset key, and a privacy amplification subset key using which the respective order of elements may be scrambled.

In general, the at least one index information key may comprise or consist of a string (of symbols and/or characters and/or bits).

At least two of (preferably each of) the initial string key, the reconciled string key, the shared string key, the reconciliation subset key, the error estimate subset key, the error correction subset key, and the privacy amplification subset key may be determined independent from each other. As a result, it cannot be inferred from one key to another.

Alternatively, at least one of (in particular each of) the initial string key, the reconciled string key, the shared string key, the reconciliation subset key, the error estimate subset key, the error correction subset key, and the privacy amplification subset key may be derived from the at least one index information key, for example, using a random number generator with the at least one of an initial string key as seed.

The respective order of at least two of (preferably each of) the first initial string, the second initial string, the first reconciled string, the second reconciled string, the shared string, the reconciliation subset, the error estimate subset, the error correction subset, and the privacy amplification subset is scrambled such that each one of the at least two is uncorrelated from each other one of the at least two.

The quantum signal may comprise a plurality of (optical) quantum states.

The method may for example follow at least one of a BB84 (Bennett-Brassard 1984) protocol, a B92 (Bennett 1992) protocol, an entanglement-based quantum key distribution protocol, a measurement-device-independent quantum key distribution protocol, and a twin-field quantum key distribution protocol.

In an example, a method for quantum key distribution may be provided, the method being carried out in a first data processing device having means for preparing and transmitting quantum states. The method may comprise at least one of the following: providing at least one index information key; generating a quantum signal indicative of a first initial string and transmitting the quantum signal to a second data processing device via a quantum channel; determining, by reconciling measurement information between the first data processing device and the second data processing device, a first reconciled string from a reconciliation subset of the first initial string; determining an error estimate from an error estimate subset of the first reconciled string; determining a shared string from an error correction subset of the first reconciled string by performing error correction on the first reconciled string; and determining, by privacy amplification, a shared key from a privacy amplification subset of the shared string. Preferably, the order of elements (the indices) within at least one of the first initial string, the first reconciled string, the shared string, the reconciliation subset, the error estimate subset, the error correction subset, and the privacy amplification subset may be scrambled using the at least one index information key before transmission to the second data processing device. Further, a first data processing device for quantum key distribution may be provided, comprising at least one processor and means for preparing and transmitting quantum states and being configured to carry out the steps of the above method.

In another example, a further method for quantum key distribution may be provided, the method being carried out in a second data processing device having means for receiving quantum states. The method may comprise at least one of the following: providing at least one secret index information key; receiving a quantum signal from a first data processing device via a quantum channel; determining, a second initial string by measuring the quantum signal; determining, by reconciling measurement information between the first data processing device and the second data processing device, a second reconciled string from a reconciliation subset of the second initial string; determining an error estimate from an error estimate subset of the second reconciled string; determining a shared string from an error correction subset of the second reconciled string by performing error correction on the second reconciled string; and determining, by privacy amplification, a shared key from a privacy amplification subset of the shared string. Preferably, the order of elements within at least one of the second initial string, the second reconciled string, the shared string, the reconciliation subset, the error estimate subset, the error correction subset, and the privacy amplification subset may be scrambled using the at least one index information key before transmission to the first data processing device. Further, a second data processing device for quantum key distribution may be provided, comprising at least one processor and means for measuring quantum states and being configured to carry out the above method.

In yet another example, a system for quantum key distribution, comprising a first data processing device with at least one processor and means for preparing and transmitting quantum states and a second data processing device with at least one processor and means for measuring quantum states maybe provided, the system being configured to carry out at least one of the following steps: providing at least one secret index information key in the first and the second data processing device; generating, in the first data processing device, a quantum signal indicative of a first initial string and transmitting the quantum signal to the second data processing device via a quantum channel; receiving the quantum signal in the second data processing device; determining, in the second data processing device, a second initial string by measuring the quantum signal; determining, by reconciling measurement information between the first data processing device and the second data processing device, a first reconciled string from a reconciliation subset of the first initial string in the first data processing device and a second reconciled string from the reconciliation subset of the second initial string in the second data processing device; determining at least one of an error estimate from an error estimate subset of the first reconciled string in the first data processing device and a further error estimate from the error estimate subset of the second reconciled string in the second data processing device; determining a shared string from an error correction subset of the first reconciled string and the second reconciled string by performing error correction on the first reconciled string in the first data processing device and on the second reconciled string in the second data processing device; and determining, by privacy amplification in the first and the second data processing device, a shared key from a privacy amplification subset of the shared string. Preferably, the order of elements within at least one of the first initial string, the second initial string, the first reconciled string, the second reconciled string, the shared string, the reconciliation subset, the error estimate subset, the error correction subset, and the privacy amplification subset may be scrambled using the at least one index information key before transmission to the first and/or the second data processing device. A corresponding method for quantum key distribution may be provided as well.

The aforementioned embodiments related to methods for quantum key distribution can be provided correspondingly for the data processing devices and the system for quantum key distribution.

Description of embodiments

In the following, embodiments, by way of example, are described with reference to the Figures, in which:

Fig. 1 shows a graphical representation of an arrangement of a system for quantum key distribution and an eavesdropping device and

Fig. 2 shows a graphical representation of a method for quantum key distribution.

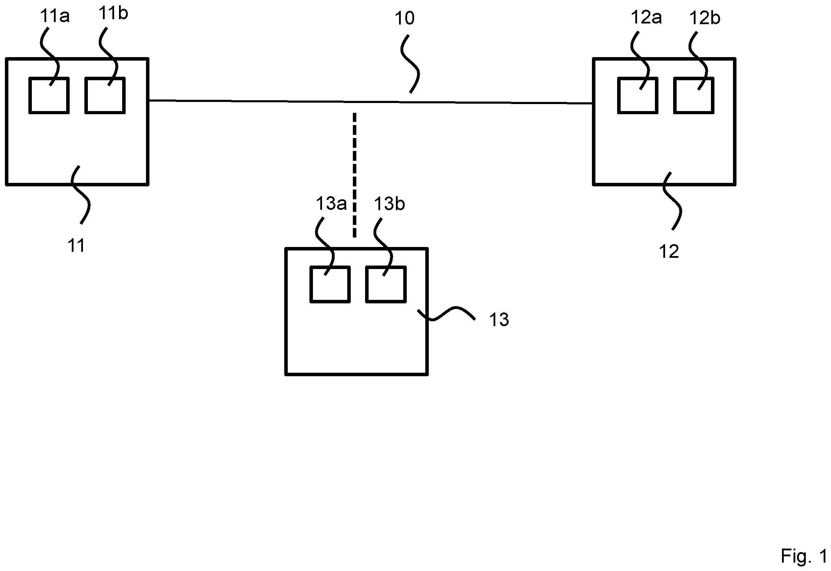

In Fig. 1, a graphical representation of an arrangement comprising a system for quantum key distribution and an eavesdropping device 13 ("*Eve*") is shown. The system comprises a communication channel (transmission line) 10 for transmitting classical signals and/or quantum signals, between a first data processing device 11 ("*Alice*") and a second data processing device 12 ("*Bob*"). The communication channel 10 may comprise a classical channel and/or a quantum channel. Further, the communication channel 10 may comprise at least one optical fiber for transmitting optical signals. At least one (optical) amplifier (not shown) may be provided along the communication channel 10 for amplifying the (optical) signals.

The first data processing device 11 may comprise a first processor 11a and a first memory 11b and the second data processing device 12 may comprise a second processor 12a and a second memory 12b. The first and the second data processing device 11, 12 may or may not be part of the system. The first data processing device 11 and the second data processing device 12 are connected to the quantum channel.

The eavesdropping device 13 with an eavesdropping processor 13a and an eavesdropping memory 13b represents a device outside the system with potential access to quantum channel 10. The eavesdropping device 13 may be arranged at the transmission line 10 such that the optical signals transmitted via the transmission line 10 are at least partially received and/or retransmitted by the eavesdropping device 13. The eavesdropping device 13 may also access the further communication channels.

At least one of, preferably each of the first data processing device 11, the second data processing device 12, and the eavesdropping processing device 13 may comprise means to at least one of prepare, transmit, receive, and measure quantum states, in particular optical quantum states. For example, photons may be received via a (single-)photon detector.

The first memory 11b, the second memory 12b, the third memory, and the eavesdropping memory 13b may each comprise a quantum memory that is configured to store quantum signals and a classical memory that is configured to store classical signals. The quantum memory may be provided using optical delay lines, controlled reversible inhomogeneous broadening (CRIB), a Duan-Lukin-Cirac-Zoller (DLCZ) scheme, revival of silenced echo (ROSE), and/or hybrid photon echo rephasing (HYPER).

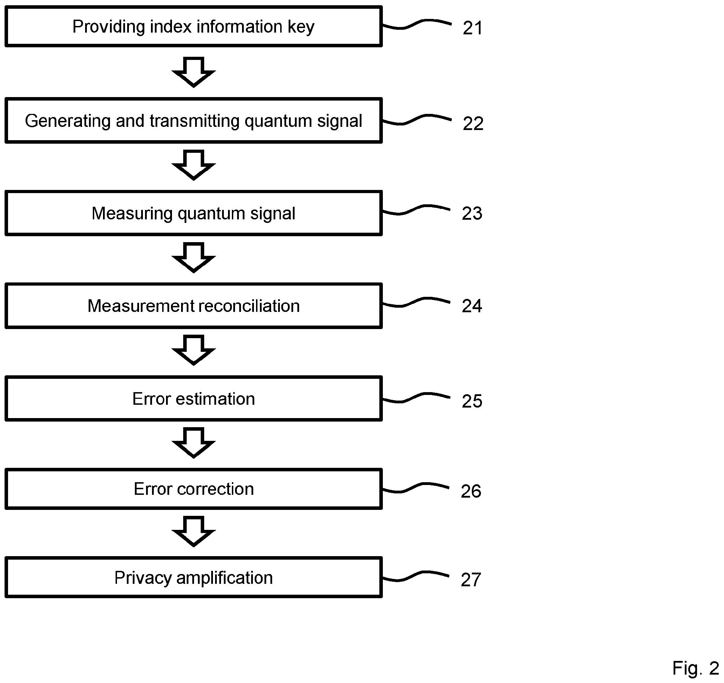

In Fig. 2, a graphical representation of a method for quantum key distribution is shown.

In general, the method may be used together with several known QKD protocols such as BB84.

In QKD, the secret key rate $K$ (number of secret bits per single transmission), which indicates the efficiency of the employed QKD protocol, is expressed as the difference between the amount of information transmitted $I_{AB}$ from the first data processing device 11 to the second data processing device 12 and the amount of information $I_E$ obtained by the eavesdropping device 13:

$$K = I_{AB} - I_E$$

In the case of employing the BB84 protocol, $I_{AB} = 1 - H(e)$ and $I_E = H(e)$, and the key rate can be represented by the formula $K = I_{AB} - I_E = 1 - H(e) - H(e) = 1 - 2H(e)$, where $H(e) = -(e\log_2 e + (1 - e)\log_2(1 - e))$ is the Shannon entropy of the quantum bit error rate (QBER) $e$.

The eavesdropper may obtain information about a secret bit in two ways: first, they interact with the quantum communication channel and gain on average $H(e)$ bits of information from the quantum signal, and, second, they gain additional $H(e)$ bits of information from the classical communication between the first data processing device 11 to the second data processing device 12. The smaller the QBER $e$, the less information is leaked to the eavesdropping device 13.

QKD works when the secret key rate is positive ($K > 0$), which means that the amount of information that is leaked to the eavesdropping device 13 is less than one bit per single transmission. In turn, this implies that there is a maximum tolerable error rate of $e \simeq 0.11$ (critical QBER). Hence, reducing the eavesdropper's knowledge directly improves QKD security in terms of increasing the secret key rate.

The respective steps of the proposed method are explained in more detail in the following sections.

a) Providing an index information key for order scrambling

In a first step 21, at least one index information key is provided/distributed in the first data processing device 11 and the second data processing device 12. This can for example be achieved by employing a known classical key distribution protocol or quantum key distribution protocol or a previous key from a preceding execution of the method. Further, an authentication key may be provided in the first data processing device 11 and the second data processing device 12 for mutual authentication.

The at least one index information key may be used to encrypt or scramble the order (ordering) of processed strings during the QKD protocol (e.g., the first/second initial string, the first/second reconciled string, or the shared string), in particular after synchronization of the quantum signal (see below step d).

For example, bits within a string may be renumerated/permuted (which may be represented by respectively permuted indices), e.g., within one data block according to a particular rule. Further QKD procedures such as error correction or privacy amplification are then to be performed on the respective permuted string.

For illustration, each data block may comprise four bits ($b_1, b_2, b_3, b_4$). A permuted block can for example be ($b_3, b_1, b_4, b_2$) or ($b_2, b_3, b_1, b_4$). All possible permutations, as well as the original non-permuted order of bits, may be included in a permutation list and may each be assigned a permutation number $k \leq N$, wherein $N$ denotes the total number of possible permutations. For example, in case $k = 1$, the order of bits may be determined as ($b_1, b_2, b_3, b_4$); in case of $k = 2$, the order of bits may be determined as ($b_3, b_1, b_4, b_2$); in case of $k = 3$, the order of bits may be determined as ($b_2, b_3, b_1, b_4$), etc.

The following table provides an example of lists of (string) indices for different values of permutation number $k$ for data block size $M = 4$. The first index list ($k = 1$) corresponds to no permutation, while the remaining lists ($k > 1$) are randomly shuffled/permuted. The total number of lists is $N$. The whole table may be exchanged (in particular, publicly announced) in advance, but the determined concrete permutation number (permutation key) $k$ is kept secret.

$$k = 1: \quad 1 \quad 2 \quad 3 \quad 4$$

$$k = 2: \quad 3 \quad 1 \quad 4 \quad 2$$

$$k = 3: \quad 2 \quad 3 \quad 1 \quad 4$$

$$\cdots$$

$$k = N: \quad 3 \quad 4 \quad 1 \quad 2$$

To provide for the same particular $k$-th permutation being carried out jointly in both the first and the second data processing device 11, 12, at least $n = \log N$ secret bits need to be shared.

The value of the permutation number $k$ may be determined from the at least one index information key. The value of $k$ is not revealed to any third party and looks random for any eavesdropper. However, it may be assumed that the total set of $N$ possible permutations is accessible to the eavesdropping device 13 - only the particular determined permutation is not accessible.

The employed data block size $M$ may be between $10^3$ and $10^7$, preferably between $10^4$ and $10^6$, more preferably between $0.8 \cdot 10^5$ and $1.2 \cdot 10^5$ (the above example with $M = 4$ is merely for illustration).

By secretly permuting indices, QKD security is affected as follows. A block of $M \simeq 10^5$ bits that has an equal number of zeros and ones can be non-trivially permuted in $C_{M/2}^M = \frac{M!}{(M/2)!(M/2)!} \simeq 2^M$ different ways. If $n = 256$ secret bits are used to agree on a particular permutation, $2^n << 2^M$ different options are available. Therefore, almost certainly all possible permutations that may be performed are non-trivial and can be uniquely determined by the $n$ bits.

Permutations may, e.g., be implemented via a Fisher-Yates shuffle. In particular, to shuffle an array (a list) of $M$ elements $\{b_i\}$ (indices $i = 1 \ldots M$) the following may be carried out:

for $i$ from 1 to $M$ - 1 do

- $j$ = random integer such that $i \leq j < M$
- exchange $b_i$ and $b_j$.

This procedure requires a random number generator, which should be identical in the first and the second data processing device 11, 12. The seed of the random number generator determines the employed random permutation. The seed may be determined from the at least one index information key.

b) Generating and transmitting a quantum signal

In a second step 22, a quantum signal comprising a plurality of quantum states $\{\varrho_i^A\}$ is generated by the first data processing device 11, e.g., by employing a random number generator with a probability distribution $\{p_i^A\}$. To this end, a first initial (classical) string may be generated with the probability distribution $\{p_i^A\}$ and stored in the classical memory of the first memory 11a, and the quantum signal may be generated according to the first initial string using a plurality of quantum preparation parameters $\{F_i^A\}$. Each first quantum state $\varrho_i^A$ can encode and correspond to one index / string position $i$ of the first initial string. Each quantum preparation parameter $F_i^A$ indicates how the respective first quantum state $\varrho_i^A$ is prepared, e.g., which basis is used for preparation.

In case of encoding photonic quantum states via polarization, each quantum preparation parameter $F_i^A$ may indicate one of two measurement basis settings (+, ×), the HV (horizontal/vertical) polarization basis setting + and the AD (anti-diagonal/diagonal) polarization basis setting ×. Each classical bit / symbol of the first initial string can be encoded into the polarization of a corresponding single photon. For the + polarization basis setting, the photon can hence be prepared as horizontally or vertically polarized; for the × polarization basis setting, the photon can be prepared as diagonally or anti-diagonally polarized.

The quantum signal is transmitted from the first data processing device 11 to the second data processing device 12 via the communication channel 10 and subsequently received in the second data processing device 12, yielding a plurality of (second) quantum states $\{\rho_i^B\}$ in the second data processing device 12.

c) Measuring the quantum signal

In a third step 23, the plurality of second quantum states $\{\rho_i^B\}$ is measured in the second data processing device 12. For carrying out quantum measurements in the second data processing device 12, a plurality of quantum measurement parameters $\{F_i^B\}$ is determined in the second data processing device 12, for example using a random distribution. By measuring the plurality of second quantum states $\{\rho_i^B\}$ in the second data processing device 12 employing the plurality of quantum measurement parameters, a second initial string is determined, which is classical. Each index / string position $i$ of the second initial string corresponds to one of the plurality of quantum measurement parameters

$\{F_i^B\}$ and to one of the plurality of second quantum states $\{\rho_i^B\}$. Each quantum preparation parameter $F_i^B$ indicates how the respective first quantum state $\varrho_i^B$ is measured, e.g., which basis is used for quantum measurements.

Employing a random permutation is not the only way to scramble indices of the processed strings or string subsets. During any classical post-processing procedure within QKD, a list of indices can be written as a binary sequence and encrypted by any encryption algorithm. For example, the string order may be scrambled by applying a bitwise logical operation (such as am exclusive or / XOR) on the indices and on a key string determined from the at least one index information key. A concrete example in the context of basis reconciliation is provided in below section d).

The eavesdropping device 13 may interact with the quantum signal before it is received in the second data processing device 12 in order to obtain information in connection with the shared key. Before permutation/encryption, indices of classical bits (of respective strings) coincide with the indices of quantum bits in quantum states. In this case, information gained from the quantum signal can be directly assigned to the classical data. After the permutation/encryption, the eavesdropping device 13 has to choose among all possible alternatives of information assignment.

For illustration, the following case with a data block of only two bits ($M = 2$) is considered. There are only two possible permutations ($N = 2$) and the quantum alphabet consists of two possible quantum states $\psi_0$ and $\psi_1$. Depending on the quantum state prepared by the first data processing device 11, an eavesdropping attack on a single quantum bit corresponds to discriminating between two different states $\rho_0$ and $\rho_1$. Hence, the data block corresponding to two quantum bits results in four alternatives: $\rho_0 \otimes \rho_0$, $\rho_0 \otimes \rho_1$, $\rho_1 \otimes \rho_0$, and $\rho_1 \otimes \rho_1$. After the permutation, these 4 options turn into $\rho_0 \otimes \rho_0$, $\rho_1 \otimes \rho_0$, $\rho_0 \otimes \rho_1$, and $\rho_1 \otimes \rho_1$, correspondingly. Therefore, the eavesdropping device 13 has to discriminate between $\rho_0 \otimes \rho_0$, $(\rho_0 + \rho_1)/2 \otimes (\rho_1 + \rho_0)/2$, $(\rho_1 + \rho_0)/2 \otimes (\rho_0 + \rho_1)/2$, and $\rho_1 \otimes \rho_1$.

The ability of the eavesdropping device 13 to obtain information out of this ensemble is limited by the Holevo bound $\chi$. In general, the amount of information that can be obtained from a set of states $\{\rho_i\}$ with probabilities $\rho_i$ is

$$\chi = S(\textstyle\sum p_i \rho_i) - \textstyle\sum p_i S(\rho_i)$$

where $S(\rho) = -Tr(\rho \log \rho)$ is the von Neuman entropy. The left term $S(\Sigma p_i \rho_i)$ does not change after permutation, while the right term $\Sigma p_i S(\rho_i)$ increases due to the increased mixedness of quantum states. Hence, the information obtainable by the eavesdropping device 13 decreases. The most substantial decrease of obtainable information occurs in case the states of the eavesdropping device 13 are pure and orthogonal. Without permutation, the right term $\Sigma p_i S(\rho_i)$ is zero, and after permutation, the right term $\Sigma p_i S(\rho_i)$ is equal to the Shannon entropy of an equiprobable ensemble of $N$ instances, i.e., $\log_2 N$.

Hence, the information obtainable by the eavesdropping device 13 can be reduced by at most $\log_2 N$ bits. For the first and the second data processing device 11, 12 to match the employed secret permutation, $\log_2 N$ secret bits are distributed in advance. In this instance, the gain of the secret key rate is lower than the initially distributed secret. Here, no restrictions are imposed on the capability of the eavesdropping device 13 to measure quantum states and assumed that the Holevo bound is attained.

In practice, however, the Holevo bound is far from being reached. With current experimental methods, even single-qubit measurements aimed at much lower value (Helstrom bound) are extremely difficult to realize. In particular, the simplest case of just two pure coherent states is out of experimental reach.

Therefore, there is no significant loss of security assuming that the eavesdropping device 13 cannot measure the whole quantum signal ($\simeq 10^5$ states) at once and attain the Holevo bound. In a more realistic case, the eavesdropping device 13 can measure just one quantum state at once and cannot adjust its measurement setup depending on the previous measurements. In this case, both said first and the second qubit $\rho_0$, $\rho_1$ are in the fully mixed state $(\rho_1 + \rho_0)/2$, which corresponds to the average state (the left term in the Holevo bound).

Hence, the information that can be obtained by the eavesdropping device 13 decreases to almost zero (not to exactly zero since the eavesdropping device 13 may obtain information from the alternatives $\rho_0 \otimes \rho_0$ and $\rho_1 \otimes \rho_1$, which are very rare in the asymptotic case of many bits). Therefore, no significant information can be obtained from quantum eavesdropping. This also includes a possible intercept-resend strategy in which the eavesdropping device 13 obtains the quantum signal received by the second data processing device 12 but has no access to the order within the quantum signal.

<u>d) Reconciliation</u>

In a fourth step 24, measurement information between the first data processing device 11 and the second data processing device 12 is reconciled. Such a reconciliation may include data synchronization and basis reconciliation via the communication channel 10, in particular, the classical channel. The corresponding measurement information may be exchanged between the first data processing device 11 and the second data processing device 12.

By synchronization, the beginning of transmission from the first data processing device 11 of the first quantum state $\rho_1^A$, carrying the first bit of the first initial string, is aligned with the beginning of data reception in the second data processing device 12. During quantum communication between the first data processing device 11 and the second data processing device 12, the clock rate / frequency of transmitting different quantum states is maintained, such that the enumeration of all quantum states $\{\rho_i^A\}_i$ on the side of the first data processing device 11 and quantum states $\{\rho_i^B\}_i$ on the side of the second data processing device 12 coincide.

Due to the losses in the communication channel 10, some quantum states / photons are not detected by the second data processing device 12. In known protocols, information indicating the indices of those quantum states that have been (successfully) received in the second data processing device 12 (e.g., (second) initial string indices 3, 42, 71, 107, and 119) is publicly known or communicated to the first data processing device 11, and the further data processing is performed on this subset.

Further, reconciling measurement information comprises basis reconciliation being carried out in the first data processing device 11 and the second data processing device 12. To this end, the (indices of the) reconciliation subset may be indicative of indices *i* for which the quantum measurement parameters $\{F_i^B\}$ and the quantum preparation parameters $\{F_i^A\}$ match. The remaining parts of the first and/or second initial string (for which the quantum measurement parameters and the quantum preparation parameters do not match and/or for which no quantum state was received) may be discarded. The quantum preparation parameters $\{F_i^A\}$ and the quantum measurement parameters $\{F_i^B\}$ may each indicate a (quantum basis) setting (for each index *i*). In case of encoding photonic quantum states via polarization, each quantum preparation parameter $F_i^A$ may indicate the + polarization basis (setting) and the × polarization basis setting.

In case of direct reconciliation, the first initial string is fixed and the second initial string is aligned with the first initial string. In case of reverse reconciliation, the second initial string is fixed and the first initial string is aligned with the second initial string.

As an example for encrypting indices during basis reconciliation, the following string entries / bits of the first initial string (representing a subset of the first initial string) have been determined in the first data processing device 11 to be communicated in a next step: ($b_1$, $b_7$, $b_9$, $b_{14}$). The values themselves of the string entries may be publicly communicated (transmitted to the second data processing device 12). However, the allocation of each of the communicated values to a concrete position of the initial string remains scrambled. The list of indices (1,7,9,14) of the subset ($b_1$, $b_7$, $b_9$, $b_{14}$) corresponds in binary form to (0000,0110,1000,1101), which represents a bit sequence 0000011010001101.

Instead of communicating this sequence publicly, according to the proposed method, transmission is carried out in an encrypted form. For illustration, the bit sequence, may be encrypted by repetition of a Vernam cipher with a two-bit key *k*, i.e., an XOR operation is applied on two bits of her initial sequence and, repeatedly, the two bits of the two-bit key *k*. The two-bit key *k* may be determined from (or be included in) the at least one index information key. The results are shown in the following table.

| | | | | |
|---|---|---|---|---|
| *k* = 00: | 0000 | 0110 | 1000 | 1101 |
| *k* = 01: | 0101 | 0011 | 1101 | 1000 |
| *k* = 10: | 1010 | 1100 | 0010 | 0111 |
| *k* = 11: | 1111 | 1001 | 0111 | 0010 |

For *k* = 00, the output bit sequence is identical to the input bit sequence. In case the two-bit key *k* has been determined from the at least one index information key to be *k* = 01, the first data processing device 11 may (publicly) transmit the corresponding output bit sequence 0101001111011000 to the second data processing device 12, which decrypts this sequence back to the original bit sequence 0000011010001101 (using the at least one index information key). Thus, the second data processing device 12 may correctly identify the bits which have to be selected after basis reconciliation. Encryption for the other post-processing procedures during QKD may be carried out analogously.

<u>e) Error estimation</u>

In a fifth step 25, an error estimate of the first reconciled string and the second reconciled string is determined, for example a quantum bit error rate (QBER) estimate (also referred to as parameter estimation). To this end, first error information is generated in the first data processing device 11 from the first reconciled string and transmitted to the second data processing device 12 and/or second error information is generated in the second data processing device 12 from the second reconciled string and transmitted to the first data processing device 11. Transmission of the first and/or second error information may be carried out via the classical channel and, in particular, publicly (i.e., transmission may be carried out without encryption).

The error estimate is then determined in the first data processing device 11 and/or the second data processing device 12 from the first error information and/or the second error information. If the error rate is above a threshold, the method is aborted. Otherwise, the method is continued.

The first error information can for example comprise first parity bit values of the first reconciled string or parts thereof. Further, the second error information can comprise second parity bit values of the second reconciled string or parts thereof. The error estimate may for example be determined by comparing the first parity bit values and the second parity bit values.

The indices from which the error estimate is determined are scrambled using the at least one index information key, in particular permuted or encrypted. As a result, the corresponding error information cannot be related to the reconciled strings by the eavesdropping device 13.

f) Error correction

In a sixth step 26, error correction is carried out. To this end, first error correction data may be generated from the first reconciled string in the first data processing device 11 and transmitted to the second data processing device 12. Additionally or alternatively, second error correction data may be generated from the second reconciled string in the second data processing device 12 and transmitted to the first data processing device 11.

Subsequently, differences of the first reconciled string and the second reconciled string can be determined and corrected such that the shared string may be determined in both the first data processing device 11 and the second data processing device 12.

The first error correction data may comprise first parity bit values of first data blocks of the first reconciled string and the second error correction data may comprise second parity bit values of second data blocks of the second reconciled string (CASCADE method).

Additionally or alternatively, the first error correction data may comprise a first syndrome of the first reconciled string and/or the second error correction may comprise a second syndrome of the second reconciled string (linear error-correcting code / linear block code method). The first syndrome may be determined by multiplying one of a plurality of check matrices to a (vectorized) data block of the first reconciled string. Further, the second syndrome may be determined by multiplying one of the plurality of check matrices to a (vectorized) data block of the second reconciled string.

Notably, error correction data (in particular, first/second error correction data) may at least partially coincide with error information for error estimation. The first error correction data may be transmitted from the first data processing device 11 to the second data processing device 12 (and/or vice versa), in particular via the classical channel, preferably publicly / without encryption.

Since the error correction algorithm employed by the first and the second data processing device 11, 21 may be public and known to the eavesdropper, the main difficulty for the eavesdropper is to assign information from the publicly transmitted error correction data (e.g., syndromes) to particular bits / string positions. For example, if determining the syndrome comprises the sum of the first and second bit $b_1 + b_2$ of the first reconciled string, after a (secret) permutation, this sum can instead be assigned to $b_{1371} + b_{21}$ or $b_{14} + b_{8672}$. In other words, bits with index numbers 1371 and 21 may be added and the result be publicly transmitted, while the index numbers 1371 and 21 themselves (i.e., which string parts are added) remain inaccessible to the eavesdropping device 13.

The possible syndromes may considered as basis transformations in multi-dimensional binary space, and in the transformed space, the first and the second data processing device 11, 12 simply exchange first bits (the syndromes in the space before the basis transformation). Therefore, the announcement of the first n bits uniquely determines the employed permutation / encryption that has been used and does not affect security of QKD. In case the eavesdropper knows the classical bits only probabilistically with average guessing probability $p < 1$, the following holds. When the first and the second data processing device 11, 12 make for example $n = 256$ bits public, the eavesdropper can precisely identify the permutation with probability $p^{256}$. For $p$ being 0.9, 0.8, 0.7, or 0.6, the respective probability is equal to $10^{-12}$, $10^{-25}$, $10^{-40}$, or $10^{-57}$, which is reasonably small. Increasing n further reduces this probability, hence minimizing the chances of the eavesdropper gaining information from error correction.

In case of a non-uniform guessing probability, i.e., the eavesdropper knowing some bits better than the others, chances of gaining information are even smaller since $(p \pm \Delta)^n < p^n$ for any $\Delta > 0$. For example, if the eavesdropper knows one half of the bits precisely ($p = 1$) and knows nothing about the other half ($p = 0.5$), the probability to correctly identify the permutation is $0.5^{128} \simeq 3 \cdot 10^{-39}$. In principle, the eavesdropper could perform a brute force search among the most probable combinations. Since the number of combinations grows exponentially, this procedure will be overwhelmingly computationally complex.

g) Privacy amplification

In a seventh step 27, in order to minimize information leakage, privacy amplification is applied to the shared string, yielding the shared key.

To this end, privacy amplification data is determined in one of the first data processing device 11 and the second data processing device 12 and transmitted (via the classical channel) to the other one of the first data processing device 11 and the second data processing device 12. Hence, the privacy amplification data are distributed between the first data processing device 11 and the second data processing device 12. Using the privacy amplification data as instruction data, a privacy amplification method, e.g., a hashing method in which for example a Toeplitz matrix is multiplied with the shared string, is applied to the shared string in both the first data processing device 11 and the second data processing device 12, yielding the shared key in both the first data processing device 11 and the second data processing device 12.

The indices of the shared string from which the shared key is determined by privacy amplification may be scrambled using the at least one index information key, in particular be permuted or encrypted.

The established shared key represents a shared secret between the first data processing device 11 and the second data processing device 12 and may be employed for further cryptographic purposes, in particular for further QKD processes.

The features disclosed in this description, the figures and/or the claims may be material for the realization of various embodiments, taken in isolation or in various combinations thereof.

**Claims**

1. A method for quantum key distribution, the method being carried out in a first data processing device (11) having means for preparing and transmitting quantum states, the method comprising:

   - providing at least one secret index information key;
   - generating a quantum signal indicative of a first initial string and transmitting the quantum signal to a second data processing device (12) via a quantum channel (10);
   - determining, by reconciling measurement information between the first data processing device (11) and the second data processing device (12), a first reconciled string from a reconciliation subset of the first initial string;
   - determining an error estimate from an error estimate subset of the first reconciled string;
   - determining a shared string from an error correction subset of the first reconciled string by performing error correction on the first reconciled string; and
   - determining, by privacy amplification, a shared key from a privacy amplification subset of the shared string,

   wherein the order of elements within at least one of the first initial string, the first reconciled string, the shared string, the reconciliation subset, the error estimate subset, the error correction subset, and the privacy amplification subset is scrambled using the at least one index information key before transmission to the second data processing device (12).

2. A method for quantum key distribution, the method being carried out in a second data processing device (12) having means for receiving quantum states, the method comprising:

   - providing at least one secret index information key;
   - receiving a quantum signal from a first data processing device (11) via a quantum channel (10);
   - determining, a second initial string by measuring the quantum signal;
   - determining, by reconciling measurement information between the first data processing device (11) and the second data processing device (12), a second reconciled string from a reconciliation subset of the second initial string;
   - determining an error estimate from an error estimate subset of the second reconciled string;
   - determining a shared string from an error correction subset of the second reconciled string by performing error correction on the second reconciled string; and
   - determining, by privacy amplification, a shared key from a privacy amplification subset of the shared string,

   wherein the order of elements within at least one of the second initial string, the second reconciled string, the shared string, the reconciliation subset, the error estimate subset, the error correction subset, and the privacy amplification subset is scrambled using the at least one index information key before transmission to the first data processing device (11).

3. Method of claims 1 or 2, wherein the order is scrambled by applying a permutation on the indices of at least one of the first initial string, the second initial string, the first reconciled string, the second reconciled string, the shared string, the reconciliation subset, the error estimate subset, the error correction subset, and the privacy amplification subset.

4. Method of claim 3, wherein the permutation is uniquely determined by the at least one index information key.

5. Method of claims 3 or 4, wherein the permutation is determined using a Fisher-Yates shuffle.

6. Method of at least one of claims 3 to 5, wherein the permutation is determined using a random number generator and wherein a seed for the random number generator is determined from the at least one index information key.

7. Method of at least one of the preceding claims, wherein the order is scrambled by applying a stream cipher on the indices of at least one of the second initial string, the second reconciled string, the shared string, the reconciliation subset, the error estimate subset, the error correction subset, and the privacy amplification subset.

8. Method of at least one of the preceding claims, wherein the order is scrambled block-wise with a predetermined block size.

9. Method of at least one of the preceding claims, wherein the at least one index information key is provided using at least of an RSA method, a Diffie-Hellman method, and a previous quantum key distribution sequence.

10. Method of at least one of the preceding claims, wherein the at least one index information key comprises at least one of an initial string key, a reconciled string key, a shared string key, a reconciliation subset key, an error estimate subset key, an error correction subset key, and a privacy amplification subset key using which the respective order of elements is scrambled.

11. Method of at least one of the preceding claims, wherein the respective order of at least two of the first initial string, the second initial string, the first reconciled string, the second reconciled string, the shared string, the reconciliation subset, the error estimate subset, the error correction subset, and the privacy amplification subset is scrambled such that each one of the at least two is uncorrelated from each other one of the at least two.

12. Method of at least one of the preceding claims, wherein the quantum signal comprises a plurality of optical quantum states.

13. A first data processing device (11) for quantum key distribution, comprising at least one processor (11a) and means for preparing and transmitting quantum states and being configured to carry out following steps:

   - providing at least one secret index information key;
   - generating a quantum signal indicative of a first initial string and transmitting the quantum signal to a second data processing device (12) via a quantum channel (10);
   - determining, by reconciling measurement information between the first data processing device (11) and the second data processing device (12), a first reconciled string from a reconciliation subset of the first initial string;
   - determining an error estimate from an error estimate subset of the first reconciled string;
   - determining a shared string from an error correction subset of the first reconciled string by performing error correction on the first reconciled string; and
   - determining, by privacy amplification, a shared key from a privacy amplification subset of the shared string,

   wherein the order of elements within at least one of the first initial string, the first reconciled string, the shared string, the reconciliation subset, the error estimate subset, the error correction subset, and the privacy amplification subset is scrambled using the at least one index information key before transmission to the second data processing device (12).

14. A second data processing device (12) for quantum key distribution, comprising at least one processor (12a) and means for measuring quantum states and being configured to carry out following steps:

   - providing at least one secret index information key;
   - receiving a quantum signal from a first data processing device (11) via a quantum channel (10);
   - determining, a second initial string by measuring the quantum signal;
   - determining, by reconciling measurement information between the first data processing device (11) and the second data processing device (12), a second reconciled string from a reconciliation subset of the second initial string;

- determining an error estimate from an error estimate subset of the second reconciled string;
- determining a shared string from an error correction subset of the second reconciled string by performing error correction on the second reconciled string; and
- determining, by privacy amplification, a shared key from a privacy amplification subset of the shared string,

wherein the order of elements within at least one of the second initial string, the second reconciled string, the shared string, the reconciliation subset, the error estimate subset, the error correction subset, and the privacy amplification subset is scrambled using the at least one index information key before transmission to the first data processing device (11).

15. A system for quantum key distribution, comprising a first data processing device (11) with at least one processor (11a) and means for preparing and transmitting quantum states and a second data processing device (12) with at least one processor (12a) and means for measuring quantum states, the system being configured to carry out following steps:

- providing at least one secret index information key in the first and the second data processing device (11, 12);
- generating, in the first data processing device (11), a quantum signal indicative of a first initial string and transmitting the quantum signal to the second data processing device (12) via a quantum channel (10);
- receiving the quantum signal in the second data processing device (12);
- determining, in the second data processing device (12), a second initial string by measuring the quantum signal;
- determining, by reconciling measurement information between the first data processing device (11) and the second data processing device (12), a first reconciled string from a reconciliation subset of the first initial string in the first data processing device (11) and a second reconciled string from the reconciliation subset of the second initial string in the second data processing device (12);
- determining at least one of an error estimate from an error estimate subset of the first reconciled string in the first data processing device (11) and a further error estimate from the error estimate subset of the second reconciled string in the second data processing device (12);
- determining a shared string from an error correction subset of the first reconciled string and the second reconciled string by performing error correction on the first reconciled string in the first data processing device (11) and on the second reconciled string in the second data processing device (12); and
- determining, by privacy amplification in the first and the second data processing device (11, 12), a shared key from a privacy amplification subset of the shared string,

wherein the order of elements within at least one of the first initial string, the second initial string, the first reconciled string, the second reconciled string, the shared string, the reconciliation subset, the error estimate subset, the error correction subset, and the privacy amplification subset is scrambled using the at least one index information key before transmission to the first and/or the second data processing device (11,12).

**Amended claims in accordance with Rule 137(2) EPC.**

1. A method for quantum key distribution, the method being carried out in a first data processing device (11) having means for preparing and transmitting quantum states, the method comprising:

- providing at least one secret index information key;
- generating a quantum signal indicative of a first initial string and transmitting the quantum signal to a second data processing device (12) via a quantum channel (10);
- determining, by reconciling measurement information between the first data processing device (11) and the second data processing device (12), a first reconciled string from a reconciliation subset of the first initial string;
- determining an error estimate from an error estimate subset of the first reconciled string;
- determining a shared string from an error correction subset of the first reconciled string by performing error correction on the first reconciled string; and
- determining, by privacy amplification, a shared key from a privacy amplification subset of the shared string, **characterized in that** the order of elements within at least one of the first initial string, the first reconciled string, the shared string, the reconciliation subset, the error estimate subset, the error correction subset, and the privacy amplification subset is scrambled using the at least one index information key before transmission to the second data processing device (12).

2. A method for quantum key distribution, the method being carried out in a second data processing device (12) having means for receiving quantum states, the method comprising:

- providing at least one secret index information key;
- receiving a quantum signal from a first data processing device (11) via a quantum channel (10);
- determining, a second initial string by measuring the quantum signal;
- determining, by reconciling measurement information between the first data processing device (11) and the second data processing device (12), a second reconciled string from a reconciliation subset of the second initial string;
- determining an error estimate from an error estimate subset of the second reconciled string;
- determining a shared string from an error correction subset of the second reconciled string by performing error correction on the second reconciled string; and
- determining, by privacy amplification, a shared key from a privacy amplification subset of the shared string, **characterized in that** the order of elements within at least one of the second initial string, the second reconciled string, the shared string, the reconciliation subset, the error estimate subset, the error correction subset, and the privacy amplification subset is scrambled using the at least one index information key before transmission to the first data processing device (11).

3. Method of claims 1 or 2, wherein the order is scrambled by applying a permutation on the indices of at least one of the first initial string, the second initial string, the first reconciled string, the second reconciled string, the shared string, the reconciliation subset, the error estimate subset, the error correction subset, and the privacy amplification subset.

4. Method of claim 3, wherein the permutation is uniquely determined by the at least one index information key.

5. Method of claims 3 or 4, wherein the permutation is determined using a Fisher-Yates shuffle.

6. Method of at least one of claims 3 to 5, wherein the permutation is determined using a random number generator and wherein a seed for the random number generator is determined from the at least one index information key.

7. Method of at least one of the preceding claims, wherein the order is scrambled by applying a stream cipher on the indices of at least one of the second initial string, the second reconciled string, the shared string, the reconciliation subset, the error estimate subset, the error correction subset, and the privacy amplification subset.

8. Method of at least one of the preceding claims, wherein the order is scrambled block-wise with a predetermined block size.

9. Method of at least one of the preceding claims, wherein the at least one index information key is provided using at least of an RSA method, a Diffie-Hellman method, and a previous quantum key distribution sequence.

10. Method of at least one of the preceding claims, wherein the at least one index information key comprises at least one of an initial string key, a reconciled string key, a shared string key, a reconciliation subset key, an error estimate subset key, an error correction subset key, and a privacy amplification subset key using which the respective order of elements is scrambled.

11. Method of at least one of the preceding claims, wherein the respective order of at least two of the first initial string, the second initial string, the first reconciled string, the second reconciled string, the shared string, the reconciliation subset, the error estimate subset, the error correction subset, and the privacy amplification subset is scrambled such that each one of the at least two is uncorrelated from each other one of the at least two.

12. Method of at least one of the preceding claims, wherein the quantum signal comprises a plurality of optical quantum states.

13. A first data processing device (11) for quantum key distribution, comprising at least one processor (11a) and means for preparing and transmitting quantum states and being configured to carry out following steps:

- providing at least one secret index information key;
- generating a quantum signal indicative of a first initial string and transmitting the quantum signal to a second data processing device (12) via a quantum channel (10);

- determining, by reconciling measurement information between the first data processing device (11) and the second data processing device (12), a first reconciled string from a reconciliation subset of the first initial string;
- determining an error estimate from an error estimate subset of the first reconciled string;
- determining a shared string from an error correction subset of the first reconciled string by performing error correction on the first reconciled string; and
- determining, by privacy amplification, a shared key from a privacy amplification subset of the shared string, **characterized in that** the order of elements within at least one of the first initial string, the first reconciled string, the shared string, the reconciliation subset, the error estimate subset, the error correction subset, and the privacy amplification subset is scrambled using the at least one index information key before transmission to the second data processing device (12).

14. A second data processing device (12) for quantum key distribution, comprising at least one processor (12a) and means for measuring quantum states and being configured to carry out following steps:

- providing at least one secret index information key;
- receiving a quantum signal from a first data processing device (11) via a quantum channel (10);
- determining, a second initial string by measuring the quantum signal;
- determining, by reconciling measurement information between the first data processing device (11) and the second data processing device (12), a second reconciled string from a reconciliation subset of the second initial string;
- determining an error estimate from an error estimate subset of the second reconciled string;
- determining a shared string from an error correction subset of the second reconciled string by performing error correction on the second reconciled string; and
- determining, by privacy amplification, a shared key from a privacy amplification subset of the shared string, **characterized in that** the order of elements within at least one of the second initial string, the second reconciled string, the shared string, the reconciliation subset, the error estimate subset, the error correction subset, and the privacy amplification subset is scrambled using the at least one index information key before transmission to the first data processing device (11).

15. A system for quantum key distribution, comprising a first data processing device (11) with at least one processor (11a) and means for preparing and transmitting quantum states and a second data processing device (12) with at least one processor (12a) and means for measuring quantum states, the system being configured to carry out following steps:

- providing at least one secret index information key in the first and the second data processing device (11, 12);
- generating, in the first data processing device (11), a quantum signal indicative of a first initial string and transmitting the quantum signal to the second data processing device (12) via a quantum channel (10);
- receiving the quantum signal in the second data processing device (12);
- determining, in the second data processing device (12), a second initial string by measuring the quantum signal;
- determining, by reconciling measurement information between the first data processing device (11) and the second data processing device (12), a first reconciled string from a reconciliation subset of the first initial string in the first data processing device (11) and a second reconciled string from the reconciliation subset of the second initial string in the second data processing device (12);
- determining at least one of an error estimate from an error estimate subset of the first reconciled string in the first data processing device (11) and a further error estimate from the error estimate subset of the second reconciled string in the second data processing device (12);
- determining a shared string from an error correction subset of the first reconciled string and the second reconciled string by performing error correction on the first reconciled string in the first data processing device (11) and on the second reconciled string in the second data processing device (12); and
- determining, by privacy amplification in the first and the second data processing device (11, 12), a shared key from a privacy amplification subset of the shared string, **characterized in that** the order of elements within at least one of the first initial string, the second initial string, the first reconciled string, the second reconciled string, the shared string, the reconciliation subset, the error estimate subset, the error correction subset, and the privacy amplification subset is scrambled using the at least one index information key before transmission to the first and/or the second data processing device (11,12).

Fig. 1

```
┌─────────────────────────────────────────┐
│      Providing index information key     │─────── 21
└─────────────────────────────────────────┘
                    ⇩
┌─────────────────────────────────────────┐
│   Generating and transmitting quantum signal  │─────── 22
└─────────────────────────────────────────┘
                    ⇩
┌─────────────────────────────────────────┐
│        Measuring quantum signal          │─────── 23
└─────────────────────────────────────────┘
                    ⇩
┌─────────────────────────────────────────┐
│        Measurement reconciliation        │─────── 24
└─────────────────────────────────────────┘
                    ⇩
┌─────────────────────────────────────────┐
│             Error estimation             │─────── 25
└─────────────────────────────────────────┘
                    ⇩
┌─────────────────────────────────────────┐
│             Error correction             │─────── 26
└─────────────────────────────────────────┘
                    ⇩
┌─────────────────────────────────────────┐
│          Privacy amplification           │─────── 27
└─────────────────────────────────────────┘
```

Fig. 2

Europäisches
Patentamt

European
Patent Office

Office européen
des brevets

# EUROPEAN SEARCH REPORT

**Application Number**

**EP 24 20 8484**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/247558 A1 (KRONBERG DMITRY [CH]) 4 August 2022 (2022-08-04) * abstract * * paragraphs [0002] - [0130] * * figures 1-4 * | 1-15 | INV. H04L9/08 |
| A | BRICE COLOMBIER ET AL: "Key Reconciliation Protocols for Error Correction of Silicon PUF Responses", IACR, INTERNATIONAL ASSOCIATION FOR CRYPTOLOGIC RESEARCH, vol. 20160929:104934, 29 September 2016 (2016-09-29), pages 1-28, XP061021851, [retrieved on 2016-09-29] * the whole document * | 1-15 | |

**TECHNICAL FIELDS SEARCHED (IPC)**

H04L
H04W

The present search report has been drawn up for all claims

| Place of search | Date of completion of the search | Examiner |
|---|---|---|
| Munich | 21 March 2025 | Mariggis, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 24 20 8484

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2025

| Patent document cited in search report | Publication date | Patent family member(s) | | Publication date |
|---|---|---|---|---|
| US 2022247558 A1 | 04-08-2022 | AU | 2022200387 A1 | 11-08-2022 |
| | | AU | 2024203087 A1 | 30-05-2024 |
| | | CA | 3146942 A1 | 27-07-2022 |
| | | CN | 114817940 A | 29-07-2022 |
| | | EP | 4037247 A1 | 03-08-2022 |
| | | JP | 7440108 B2 | 28-02-2024 |
| | | JP | 2022115095 A | 08-08-2022 |
| | | KR | 20220108742 A | 03-08-2022 |
| | | US | 2022247558 A1 | 04-08-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4037247 A1
- CN 108737079 A
- CN 112187449 A
- US 2016127073 A1